# EUROPÄISCHE PATENTSCHRIFT

(11) **EP 0 419 720 B1**
(45) Veröffentlichungstag und Bekanntmachung des Hinweises auf die Patenterteilung: **22.06.1994**
(21) Anmeldenummer: 89118078.8
(22) Anmeldetag: 29.09.1989
(51) Int. Cl.: H04Q 3/52, H04Q 11/00

(54) **Lichtwellenleiter-Telekommunikationssystem mit einem oder mehreren im LWL-Weg liegenden optischen Schalter(n)**
Fibre-optical telecommunication system with one or more optical switches inserted in the optical path
Système de télécommunication à fibre optique avec un ou plusiers commutateurs optiques situés sur le chemin optique

(43) Veröffentlichungstag der Anmeldung: 03.04.1991
(73) Patentinhaber: SIEMENS AKTIENGESELLSCHAFT, 80333 München (DE)
(72) Erfinder: Stegmeier, Herbert, Dr.-Ing., D-8021 Strasslach (DE)

(56) Entgegenhaltungen:
- EP-A- 0 313 389
- PATENT ABSTRACTS OF JAPAN, Bd. 10, Nr. 370 (E-463)(2427) 10 Dezember 1986;& JP-A-61164395
- IEEE COMMUNICATIONS MAGAZINE, Bd. 25, Nr. 5, Mai 87, New York, NY,US; Seiten 50 - 55; R.PRUNCAL et al: "Photonic Switch with Optically Self Routed Bit Switching"
- PATENT ABSTRACTS OF JAPAN, Bd. 8, Nr. 49 (E-230)(1486) 6 März 1984;& JP-A-58 202637
- PATENT ABSTRACTS OF JAPAN, Bd. 13, Nr. 433 (E-824)(3781) 27 September 1989;& JP-A-62 317524
- TELCOM REPORT, Bd. 10, Nr. 2, März 1987, München,DE;Seiten 90 - 98; F.AURACHER et al: "Entwicklungstendenzen der Intergrierten Optik"

## Beschreibung

In Lichtwellenleiter-Telekommunikationssystemen stellt sich vielfach die Aufgabe, in einem Netz von Lichtwellenleitern Umkonfigurationen vorzunehmen, beispielsweise zum Zwecke einer Ersatzschaltung, einer Umrangierung oder auch eines vermittlungstechnischen Verbindungsaufbaus bzw. -abbaus. Hierfür kann man elektromechanisch-optische Schalter oder integriert-optische Schalter vorsehen; Ersatzschaltungsmaßnahmen und Umrangierungen kann man darüber hinaus auch mit Hilfe von Steckverbindern bewirken, die indessen eine - vielfach unerwünschte - unmittelbare Handhabung erfordern. Die Ansteuerung elektromechanisch-optischer Schalter oder auch integriert-optischer Schalter geschieht über entsprechende Steuerleitungen, die sich allerdings in einem verzweigten LWL-Netz mit einer Vielzahl dezentraler Schalter schnell als relativ aufwendig erweisen können.

Zum vermittlungstechnischen Aufbau von LWL-Verbindungen zwischen LWL-Teilnehmernehmeranschlußleitungen ist (aus VDI nachrichten Nr.36/07.09.84, Seite 17) eine Schaltmatrix von elektromechanisch in ihrer Lage umschaltbaren und damit gewissermaßen ein- und ausschaltbaren Spiegeln bekannt, bei der vom rufenden Teilnehmer über dessen LWL-Teilnehmeranschlußleitung gegebene Steuersignale vor der Schaltmatrix über kleine Glasstreifen im Strahlengang zu einer Wahlauswertung gelangen, die ein Steuersystem veranlaßt, einen Spiegel im Weg des betreffenden Teilnehmers zu betätigen. Eine solche Spiegelmatrix, die ein relativ kompliziertes elektromechanisches Gebilde darstellt, setzt indessen zum einen eine Konzentration der optischen Schaltelemente (Spiegel) in eben dieser Matrix voraus und erfordert zum anderen eine zusätzliche Matrix-oder Sternstruktur von Steuerleitungen, die zu den einzelnen Spiegeln der Matrix führen.

In ganz ähnlicher Weise finden sich eine solche Konzentration der optischen Schaltelemente in einem Koppelfeld und eine von dessen Zubringerleitungen zu einer zentralen Steuereinrichtung bzw. von dieser zu den einzelnen Schaltelementen sich erstreckende Steuerleitungsstruktur auch bei einer anderen bekannten optischen Vermittlung (Abstract JP-A-61-164 395 ).

Es ist auch schon (aus EP-A-0 313 389) ein optisches Paketvermittlungssystem mit in Koppelstufen angeordneten optischen 2x2-Koppelschaltern bekannt, bei dem jeder Koppelschalter an seinen zwei Eingängen zwei Pufferspeichereinrichtungen aufweist, die zu dem Eingang eines optischen Umschalters führen, dessen beiden Ausgänge die beiden Koppelschalterausgänge bilden, wobei dem optischen Umschalter im Lichtwellenleiterpfad ein optischer Demultiplexer vorgeschaltet ist, durch den aus einem Routing Header nur Licht einer koppelstufenindividuell festgelegten Wellenlänge auskoppelbar ist; von diesem Demultiplexer her wird über einen optoelektrischen Wandler der im Lichtwellenleiterpfad nachfolgende optische Umschalter gesteuert, wobei je nachdem, ob im Routing Header Licht der für die betreffende Koppelstufe festgelegten Wellenlänge enthalten ist oder nicht, der optische Umschalter in seinen einen oder in seinen anderen Schaltzustand gelangt. Eine solche Steuerung mittels koppelstufenindividuellen Steuerlichts kann in einem konzentrierten Koppelfeld mit relativ wenigen Koppelstufen praktikabel sein; wollte man in entsprechender Weise auch dezentral in einem Lichtwellenleiter-Netz angeordnete, dann auch nicht koppelstufenweise ansteuerbare optische Schalter ansteuern, so würde dies eine Vielzahl von (schalterindividuellen) Steuer-Wellenlängen erfordern, wobei ein solches Wellenlängenmanagement aber praktisch nicht zu realisieren ist.

Es ist auch schon (aus IEEE Communications Magazine 25(1987)5, 50...55) ein optische Vermittlungssystem mit einem mehrstufigen NxN-Koppelfeld bekannt, bei dem den einzelnen optischen Koppelelementen jeweils ein optisches Verzögerungsglied vorgeschaltet ist, vor dem aus dem Lichtwellenleiter ein zu einem optischen Steuerelement zur Steuerung des betreffenden optischen Koppelelements führender Weg abzweigt. Bei diesem Vermittlungssystem ist jedes der einzelnen durchzuschaltenden Nutzsignalbits jeweils mit seiner Zieladresse codiert; dies setzt einerseits einen entsprechenden schaltungstechnischen Aufwand voraus und führt zu entsprechend erhöhten Übertragungstaktraten im System, was sich andererseits insbesondere dann als unzweckmäßig erweist, wenn nicht einzelne Bits jeweils für sich durchzuschalten sind, sondern ganze Nachrichten, oder wenn Umschaltungen im Netz überhaupt nur in größeren Zeitabständen, beispielsweise zur Netzumkonfiguration im Ersatzschaltungsfall, vorzunehmen sind.

Die Erfindung stellt sich nun die Aufgabe, einen Weg zu einer individuellen Ansteuerung auch von dezentral in einem LWL-Netz angeordneten optischen Schaltern aufzuzeigen, die sowohl eine solche Codierung der einzelnen Nutzsignalbits als auch Licht einer Vielzahl von Steuer-Wellenlängen vermeidet und die auch kein zu den einzelnen optischen Schaltern führendes gesondertes Steuernetz erfordert.

Die Erfindung betrifft ein Lichtwellenleiter-Telekommunikationssystem mit einem oder mehreren im LWL-Weg von Nutzsignale und Steuersignale führendem Licht liegenden optischen Schalter(n), die nach Maßgabe von aus dem zum jeweiligen optischen Schalter führenden Lichtwellenleiter ausgekoppelten Steuersignalen steuerbar sind, wobei jedem optischen Schalter im Lichtwellenleiter ein optischer Demultiplexer vorgeschaltet ist, durch den im Wellenlängenmultiplex mit dem nutzsignalführenden Licht über den Lichtwellenleiter übertragenes steuersignalführendes Licht ausgekoppelt und einem optoelektrischen Wandler zugeführt wird; dieses LWL-Telekommunikationssystem ist erfindungsgemäß dadurch gekennzeichnet, daß im optischen Demultiplexer jeweils ein das gesamte durch Codierung jeweils mit einer Schalteradresse und einem Schaltbefehl gebildete Steuersignal enthaltender Strahlanteil des im dichten Wellenlängenmultiplex mit dem nutzsignalführenden Licht über den Lichtwellenleiter übertragenen steuersignalführenden Lichts ausgekoppelt und einer dem optischen Demultiplexer nachfolgenden Decoderschaltung zugeführt wird, die nur bei Empfang der Schalteradresse des zugehörigen optischen Schalters den zugehörigen Schaltbefehl bei diesem optischen Schalter wirksam werden läßt.

Die Erfindung bringt den Vorteil mit sich, auch in einem verzweigten optischen LWL-Netz von einer Zentrale aus dezentral angeordnete optische Schalter ferngesteuert betätigen zu können, ohne dafür ein zusätzliches, in Bus- oder Sternstruktur zu den optischen Schaltern führendes Steuernetz zu benötigen, wobei es weder Lichts einer Vielzahl von Steuer-Wellenlängen bedarf, noch das nutzsignalführende Licht adressencodiert sein muß.

Weitere Besonderheiten der Erfindung werden aus der nachfolgenden näheren Erläuterung eines Ausführungsbeispiels eines Telekommunikationssystems gemäß der Erfindung anhand der Zeichnung ersichtlich.

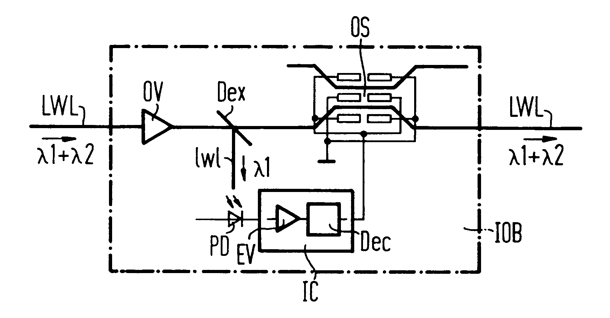

In der Zeichnung ist schematisch in einem zum Verständnis der Erfindung erforderlichen Umfang ein Ausschnitt aus einem Lichtwellenleiter-(LWL-)Telekommunikationssystem mit einem im Lichtwellenleiter-Weg LWL - LWL liegenden optischen Schalter OS dargestellt. Ein solcher optischer Schalter kann, wie die auch in der Zeichnung verdeutlicht ist, durch einen steuerbaren elektrooptischen Richtkoppler gebildet sein.
Bei einem steuerbaren elektrooptischen Richtkoppler sind zwei Streifenwellenleiter - das sind durch Eindiffusion (z.B. von Titan in Lithiumniobat) in einem Substrat erzeugte schmale dünne Streifen, die eine größere optische Brechzahl als das Substrat haben, - in einem Koppelbereich bestimmter Länge sehr eng, in einem Abstand von typischerweise etwa 5 »m, nebeneinander geführt, so daß sich die optischen Felder überlappen und Lichtenergie von dem einen Streifenwellenleiter auf den anderen Streifenwellenleiter übergekoppelt werden kann; im Koppelbereich neben und zwischen den Streifenwellenleitern befinden sich Steuerelektroden, die mit einem die Überkopplung beeinflussenden elektrischen Steuersignal beaufschlagt sind: Bei Anliegen einer entsprechenden Steuerspannung findet keine Überkopplung statt; das Fehlen einer Steuerspannung kann mit einer vollständigen Überkopplung verbunden sein (ntz 39(1986)12, 828...830, Bild 3c und 3d; telcom report 10(1987)2, 90...98, Bild 8).

Dem optischen Schalter OS ist im Lichtwellenleiter LWL-LWL ein optischer Demultiplexer Dex vorgeschaltet. Ein solcher optischer Demultiplexer kann in an sich bekannter Weise durch einen Strahlteiler in Form eines teildurchlässigen Spiegels gebildet sein, der zusätzlich mit dielektrischen Interferenzfilterschichten versehen ist (telcom report 6(1983) Beiheft Nachrichtenübertragung mit Licht, Seite 111, linke Spalte). Der am optischen Demultiplexer Dex vom Lichtwellenleiterweg LWL-LWL abzweigende Wellenleiter lwl führt zu einem optoelektrischen Wandler (Photodiode) PD, mit dessen Ausgang über einen Verstärker EV eine Decoderschaltung Dec verbunden ist; über diese Decoderschaltung Dec ist der optische Schalter OS steuerbar. Wie aus der Zeichnung ersichtlich ist, können der optische Demultiplexer Dex, der optoelektrische Wandler PD und der optische Schalter OS auf einem IO-(Integrierte-Optik-)Baustein IOB, vorzugsweise einem Indium-Phosphit-Kristall, zusammengefaßt sein. Wie in der Zeichnung weiter angedeutet ist, kann auf diesem IO-Baustein IOB auch ein die Decoderschaltung Dec enthaltender IC-Baustein IC hybrid aufgebracht sein, wobei in diesem IC-Baustein auch der Verstärker EV integriert sein kann.
Dem optischen Demultiplexer Dex ist in dem in der Zeichnung skizzierten Ausführungsbeispiel eines Lichtwellenleiter-Telekommunikationssystems gemäß der Erfindung ein optischer Verstärker OV vorgeschaltet. Die optischen Baugruppen dieses optischen Verstärkers OV sind ebenfalls auf dem IO-Baustein IOB integriert, während die elektrischen Baugruppen des optischen Verstärkers zweckmäßigerweise im IC-Baustein IC integriert sind, ohne daß dies in der Zeichnung noch näher dargestellt werden muß.
Das in der Zeichnung lediglich in einem Ausschnitt skizzierte Lichtwellenleiter-Telekommunikationssystem kann sich nach links und rechts weiter fortsetzen und sich dabei gegebenenfalls auch verzweigen, wobei im LWL-Weg weitere IO-Schalterbausteine vorgesehen sein können.

In dem in der Zeichnung ausschnittsweise skizzierten Lichtwellenleiter-Telekommunikationssystem wird über den Lichtwellenleiterweg LWL-LWL mit Nutzsignalen mit einer Bitrate von z.B. 2 Mbit/s oder auch einigen Gbit/s moduliertes Licht der Wellenlänge λ2 und mit Steuersignalen moduliertes Licht der Wellenlänge λ1 übertragen. Dies geschieht im dichten Wellenlängenmultiplex, d.h. die beiden Wellenlängen λ1 und λ2 liegen in ein und demselben optischen Fenster, beispielsweise bei 1300 nm oder 1500 nm. Die jeweils mit einer Schalteradresse und einem Schaltbefehl gebildeten Steuersignale geben an, welcher Schalter im Lichtwellenleiter-Telekommunikationssystem zu welchem Zeitpunkt in welcher Weise zu betätigen ist. Die Bitrate, mit der das Licht der Wellenlänge λ1 zu diesem Zwecke moduliert ist, ist, verglichen mit der Nutzsignal-Bitrate, sehr klein, da Steuersignale nur dann gesendet werden müssen, wenn ein Schalter zu betätigen ist. Das Licht beider Wellenlängen λ1 und λ2 wird im IO-Baustein IOB zunächst dem optischen Verstärker OV zugeführt, um im Netz aufgetretene Übertragungsverluste für das Licht beider Wellenlängen auszugleichen. Hinter dem optischen Verstärker OV wird im optischen Demultiplexer Dex ein Teil des steuersignalführenden Lichts der Wellenlänge λ1 ausgekoppelt. Da die Steuersignal-Bitrate wesentlich niedriger als die Nutzsignal-Bitrate ist, ist die Steuersignal-Dämpfung geringer als die Nutzsignal-Dämpfung, so daß im Auskopplungspfad lwl des optischen Demultiplexers Dex genügend Steuersignalenergie zur Verfügung steht. Die ausgekoppelten Lichtsignale werden der Photodiode PD zugeführt und dort in elektrische Signale umgewandelt. Im nachfolgenden Verstärker EV, der, da sehr schmalbändig, sehr empfindlich sein kann, werden die Steuersignale verstärkt, um anschließend in der Decoderschaltung Dec decodiert zu werden. Wenn in einem gerade empfangenen Steuersignal die darin enthaltene Schalteradresse mit der Adresse des auf dem gerade betrachteten IO-Baustein IOB befindlichen optischen Schalters OS übereinstimmt, wird diesem von der Decoderschaltung Dec her ein dem im gerade empfangenen Steuersignal enthaltenen Schaltbefehl entsprechendes Schaltsignal zugeführt, so daß der optische Schalter OS dem Schaltbefehl entsprechend umgeschaltet (geöffnet oder geschlossen) wird.

## Patentansprüche

1. Lichtwellenleiter-Telekommunikationssystem mit einem oder mehreren im LWL-Weg von Nutzsignale und Steuersignale führendem Licht liegenden optischen Schalter(n) (OS), die nach Maßgabe von aus dem zum jeweiligen optischen Schalter (OS) führenden Lichtwellenleiter (LWL) ausgekoppelten Steuersignalen steuerbar sind, wobei jedem optischen Schalter (OS) im Lichtwellenleiter (LWL) ein optischer Demultiplexer (Dex) vorgeschaltet ist, durch den im Wellenlängenmultiplex mit dem nutzsignalführenden Licht über den Lichtwellenleiter (LWL) übertragenes steuersignalführendes Licht ausgekoppelt und einem optoelektrischen Wandler (PD) zugeführt wird,
**dadurch gekennzeichnet,**
daß im optischen Demultiplexer (Dex) jeweils ein das gesamte, durch Codierung mit Schalteradressen und Schaltbefehlen gebildete Steuersignal enthaltender Strahlanteil des im dichten Wellenlängenmultiplex mit dem nutzsignalführenden Licht über den Lichtwellenleiter (LWL) übertragenen steuersignalführenden Lichts ausgekoppelt und einer dem optischen Demultiplexer (Dex) nachfolgenden Decoderschaltung (Dec) zugeführt wird, die nur bei Empfang der Schalteradresse des zugehörigen optischen Schalters (OS) den zugehörigen Schaltbefehl bei diesem optischen Schalter (OS) wirksam werden läßt.

2. LWL-Telekommunikationssystem nach Anspruch 1,
**dadurch gekennzeichnet,**
daß zwischen den optoelektrischen Wandler (PD) und die Decoderschaltung (Dec) ein Verstärker (EV) eingefügt ist.

3. LWL-Telekommunikationssystem nach Anspruch 1 oder 2,
**dadurch gekennzeichnet,**
daß dem optischen Demultiplexer (Dex) ein optischer Verstärker (OV) vorgeschaltet ist.

4. LWL-Telekommunikationssystem nach einem der Ansprüche 1 bis 3,
**dadurch gekennzeichnet,**
daß optischer Demultiplexer (Dex), optoelektrischer Wandler (PD) und optischer Schalter (OS) auf einem IO-(Integrierte-Optik-)Baustein (IOB) zusammengefaßt sind.

5. LWL-Telekommunikationssystem nach Anspruch 3 und 4,
**dadurch gekennzeichnet,**
daß die optischen Baugruppen des optischen Verstärkers (OV) auf dem IO-(Integrierte-Optik-)Baustein (IOB) integriert sind.

6. LWL-Telekommunikationssystem nach Anspruch 4 oder 5,
**dadurch gekennzeichnet,**
daß auf dem IO-Baustein (IOB) ein die Decoderschaltung (Dec) enthaltender IC-Baustein (IC) aufgebracht ist.

7. LWL-Telekommunikationssystem nach Anspruch 2 und 6,
**dadurch gekennzeichnet,**
daß der Verstärker (EV) im IC-Baustein (IC) integriert ist.

8. LWL-Telekommunikationssystem nach Anspruch 5 und Anspruch 6 oder 7,
**dadurch gekennzeichnet,**
daß die elektrischen Baugruppen des optischen Verstärkers (OV) im IC-Baustein integriert sind.

## Claims

1. Optical waveguide telecommunication system having one or more optical switch(es) (OS) which are situated in the optical waveguide path of light carrying useful signals and control signals and which are controllable according to control signals coupled out from the optical waveguide (OWG) leading to the respective optical switch (OS), in which there is connected upstream of each optical switch (OS) in the optical waveguide (OWG) an optical demultiplexer (Dex), through which control-signal-carrying light transmitted in wavelength multiplex with the useful-signal-carrying light via the optical waveguide (OWG) is coupled out and is fed to an optoelectrical transducer (PD), characterized in that in the optical demultiplexer (Dex) in each instance a beam component of the control-signal-carrying light transmitted in tight wavelength multiplex with the useful-signal-carrying light via the optical waveguide (OWG), which beam component contains the entire control signal formed by encoding with switch addresses and switch commands, is coupled out and is fed to a decoder circuit (Dec) situated downstream of the optical demultiplexer (Dex), which decoder circuit only upon reception of the switch address of the associated optical switch (OS) permits the associated switch command to become effective at this optical switch (OS).

2. OWG telecommunication system according to Claim 1, characterized in that an amplifier (EV) is inserted between the optoelectrical transducer (PD) and the decoder circuit (Dec).

3. OWG telecommunication system according to Claim 1 or 2, characterized in that an optical amplifier (OV) is connected upstream of the optical demultiplexer (Dex).

4. OWG telecommunication system according to one of Claims 1 to 3, characterized in that optical demultiplexer (Dex), optoelectrical transducer (PD) and optical switch (OS) are combined on an IO (integrated optics) module (IOB).

5. OWG telecommunication system according to Claims 3 and 4, characterized in that the optical assemblies of the optical amplifier (OV) are integrated on the IO (integrated optics) module (IOB).

6. OWG telecommunication system according to Claim 4 or 5, characterized in that an IC module (IC) including the decoder circuit (Dec) is applied to the IO module (IOB).

7. OWG telecommunication system according to Claims 2 and 6, characterized in that the amplifier (EV) is integrated in the IC module (IC).

8. OWG telecommunication system according to Claim 5 and Claim 6 or 7, characterized in that the electrical assemblies of the optical amplifier (OV) are integrated in the IC module.

## Revendications

1. Système de télécommunication à guide d'ondes lumineuses comportant un ou plusieurs interrupteurs optiques (OS), qui sont situés dans le trajet, passant par des guides d'ondes optiques, d'une lumière véhiculant des signaux utiles et des signaux de commande, et qui peuvent être commandés en fonction de signaux de commande découplés du guide d'ondes lumineuses (LWL), qui aboutit à l'interrupteur optique respectif (OS), et dans lequel en amont de chaque interrupteur optique (OS) est branché, dans le guide d'ondes lumineuses (LWL), un démultiplexeur optique (Dex), grâce auquel une lumière qui est transmise selon le multiplexage des longueurs d'onde avec la lumière, qui véhicule les signaux utiles, par l'intermédiaire du guide d'ondes lumineuses (LWL) et transmet des signaux de commande, et est découplée et envoyée à un transducteur optoélectrique (PD),
caractérisé par le fait que dans le démultiplexeur optique (Dex), une composante de rayonnement, qui contient l'ensemble du signal de commande formé par codage avec des adresses d'interrupteurs et des instructions de commutation, de la lumière qui est transmise lors du multiplexage dense des longueurs d'onde avec la lumière qui vèhicule des signaux utiles, par l'intermédiaire du guide d'ondes lumineuses (LWL), et qui véhicule des signaux de commande, est découplée et est envoyée à un circuit décodeur (Dec), qui est disposé en aval du démultiplexeur optique (Dex) et qui uniquement lors de la réception de l'adresse de l'interrupteur optique associé (OS), laisse agir l'instruction de commutation associée dans cet interrupteur optique (OS).

2. Système de télécommunication à guide d'ondes lumineuses suivant la revendication 1, caractérisé par le fait qu'un amplificateur (EV) est inséré entre le transducteur optoélectrique (PD) et le circuit décodeur (Dec).

3. Système de télécommunication à guide d'ondes lumineuses LWL suivant la revendication 1 ou 2, caractérisé par le fait qu'un amplificateur optique (OV) est branché en amont du démultiplexeur optique (Dex).

4. Système de télécommunication à guide d'ondes lumineuses suivant l'une des revendications 1 à 3, caractérisé par le fait que le démultiplexeur optique (Dex), un transducteur optoélectrique (PD) et un interrupteur optique (OS) sont réunis sur un module IO (à optique intégrée) (IOB).

5. Système de télécommunication à guide d'ondes lumineuses LWL suivant l'une des revendications 3 et 4, caractérisé par le fait que les modules optiques de l'amplificateur optique (OV) sont intégrés sur le module IO (à optique intégrée) (IOB).

6. Système de télécommunication à guide d'ondes lumineuses LWL suivant la revendication 4 ou 5, caractérisé par le fait qu'un module de circuit intégré (IC), qui contient le circuit décodeur (Dec) est disposé sur le module IO (IOB).

7. Système de tèlécommunication à guide d'ondes lumineuses suivant les revendications 2 et 6, caractérisé par le fait que l'amplificateur (EV) est intégré dans le module de circuits intégrés (IC).

8. Système de télécommunication à guide d'ondes lumineuses suivant les revendications 5 et 6, caractérisé par le fait que les modules électriques de l'amplificateur optique (OV) sont intégrés dans le module de circuit intégré.
